# FASCICULE DE BREVET EUROPEEN

(11) **EP 1 191 067 B1**
(45) Date de publication et mention de la délivrance du brevet: **28.06.2006**
(21) Numéro de dépôt: 00402603.5
(22) Date de dépôt: 20.09.2000
(51) Int. Cl.: C08L 101/00

(54) **Résines thermoplastiques modifiées par des copolymères à base d'acrylates lourds**
Mit Copolymerisaten auf Basis von schweren Acrylaten modifizierte thermoplastische Harze
Thermoplastic resins copolymers modified with copolymers based on heavy acrylates

(43) Date de publication de la demande: 27.03.2002
(73) Titulaire: Arkema, 92800 Puteaux (FR)
(72) Inventeur: Bouilloux, Alain, 27300 Bernay (FR); Lacroix, Christophe, 27700 Harquency (FR); Le Blevec, Jean-Marc, 64140 Billiere (FR); Montanari, Thibault, 27300 Bernay (FR)

(56) Documents cités:
- EP-A- 0 081 969
- EP-A- 0 096 264
- EP-A- 0 298 282
- EP-A- 0 330 015
- US-A- 4 554 320
- US-A- 5 070 145

## Description

### [Domaine de l'invention]

La présente invention concerne des résines thermoplastiques modifiées par des copolymères à base d'acrylates lourds tels que par exemple des copolymères éthylène /acrylate de 2-ethyle hexyle / anhydride maléique ou des copolymères éthylène / acrylate de 2-ethyle hexyle mélangés avec des modifiants choc fonctionnalisés. Les résines thermoplastiques sont par exemple les polyamides, le PMMA, le polycarbonate ou l'ABS. Ces résines modifiées sont utiles pour fabriquer des objets ayant une résistance au choc améliorée. On fabrique ces résines par mélange des différents constituants à l'état fondu dans des extrudeuses, des malaxeurs (par exemple co-malaxeur BUSS®) ou tout dispositif de mélange des thermoplastiques.

### [L'art antérieur]

EP 96 264 décrit des polyamides de viscosité comprise entre 2,5 et 5 renforcés par des copolymères éthylène/(méth)acrylate d'alkyle en C₂ à C₈/acide ou anhydride insaturé et comprenant 20 à 40% en poids d'acrylate. L'acrylate le plus lourd utilisé dans les exemples est l'acrylate de n-butyle.

US 5 070 145 décrit des polyamides renforcés par un mélange (i) d'un polyéthylène ou d'un copolymère éthylène/(méth)acrylate d'alkyle et (ii) d'un copolymère éthylène/(méth)acrylate d'alkyle/anhydride maléique. Comme dans l'art antérieur précédent acrylate le plus lourd utilisé dans les exemples est l'acrylate de n-butyle.

US 4 174 358 décrit des polyamides renforcés se présentant sous la forme d'une matrice de polyamide dans laquelle sont dispersés des nodules inférieurs à 1 µm ayant un certain module, devant être aussi une fraction du module du polyamide. De très nombreux renforçants sont décrits, quelques-uns ayant des fonctions époxyde. La plupart sont des polymères ayant des fonctions acides ou anhydrides neutralisées ou sont des mélanges à base d'EPDM. En colonne 13 le polymère 26 est un copolymère éthylène / méthacrylate de 2-ethyle hexyle / oxyde de carbone, il est utilisé pour modifier du polyamide 6-6.
EP 0 330 015 décrit des compositions thermoplastiques constituées d'un mélange de polypropylène et de polyamide, comprenant comme modifiant choc un copolymère d'éthylène et de (méth)acrylate d'alkyle ayant de 1 à 8 C, ainsi qu'un monomère ayant un groupe réactif avec les polyamides Dans tous les exemples présentés, les terpolymères C1 à C3 contiennent uniquement de l'acrylote de n-butyle.

La demanderesse a maintenant trouvé que si on modifiait des résines thermoplastiques par des copolymères ou des mélanges de copolymères comprenant à la fois des acrylates lourds et au moins une fonction alors on obtenait des résistances au choc nettement améliorées par rapport à l'art antérieur. La fonction peut être par exemple anhydride, acide, époxy ou amine.

### [Brève description de l'invention]

La présente invention concerne des compositions thermoplastiques comprenant :
- 40 à 97 parties d'un polymère thermoplastique (M) formant matrice choisi parmi les polyamides, les copolymères à blocs polyamides, les polymères fluorés, le polycarbonate, les résines styréniques, le PMMA, les polyuréthanes thermoplastiques (TPU), les copolymères à blocs polyester et blocs polyéther, les alliages de polycarbonate et de polyesters, les polycetones, le PVC et les copolymères de l'éthylène et de l'alcool vinylique (EVOH),
- 60 à 3 parties de (B) comprenant :
   soit un copolymère (B1) de l'éthylène et d'un acrylate d'un alkyle choisi parmi le 2-éthyle hexyle, le n-octyle et l'isononyle, et qui porte une fonction,
   soit un mélange d'un copolymère (B2) de l'éthylène et d'un acrylate d'un alkyle choisi parmi le 2-éthyle hexyle, le n-octyle et d'isononyle, et ne portant pas de fonction avec un modifiant choc qui porte une fonction.

### [Description détaillée de l'invention]

On décrit d'abord les polymères (M), s'agissant des polyamides on entend par polyamide les produits de condensation :
- d'un ou plusieurs aminoacides, tels les acides aminocaproïques, amino-7-heptanoïque, amino-11-undécanoïque et amino-12-dodécanoïque d'un ou plusieurs lactames tels que caprolactame, oenantholactame et lauryllactame ;
- d'un ou plusieurs sels ou mélanges de diamines telles l'hexaméthylènediamine, la dodécaméthylènediamine, la métaxylylènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique ; .
- ou des mélanges de certains de ces monomères ce qui conduit à des copolyamides, par exemple le PA-6/12 par condensation du caprolactame et du lauryllactame.

Les polymères à blocs polyamides et blocs polyéthers résultent de la copolycondensation de séquences polyamides à extrémités réactives avec des séquences polyéthers à extrémités réactives, telles que, entre autres :
1) Séquences polyamides à bouts de chaîne diamines avec des séquences polyoxyalkylènes à bouts de chaînes dicarboxyliques.
2) Séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatiques appelées polyétherdiols.
3) Séquences polyamides à bouts de chaînes dicarboxyliques avec des polyétherdiols, les produits obtenus étant, dans ce cas particulier, des polyétheresteramides.

Les séquences polyamides à bouts de chaînes dicarboxyliques proviennent, par exemple, de la condensation d'acides alpha-oméga aminocarboxyliques de lactames ou de diacides carboxyliques et diamines en présence d'un diacide carboxylique limiteur de chaîne. Avantageusement, les blocs polyamides sont en polyamide-12 ou en polyamide 6.

La masse molaire en nombre des séquences polyamides est comprise entre 300 et 15 000 et de préférence entre 600 et 5 000. La masse des séquences polyéther est comprise entre 100 et 6 000 et de préférence entre 200 et 3 000.

Les polymères à blocs polyamides et blocs polyéthers peuvent aussi comprendre des motifs répartis de façon aléatoire. Ces polymères peuvent être préparés par la réaction simultanée du polyéther et des précurseurs des blocs polyamides.

Par exemple, on peut faire réagir du polyétherdiol, un lactame (ou un alpha-oméga amino acide) et un diacide limiteur de chaîne en présence d'un peu d'eau. On obtient un polymère ayant essentiellement des blocs polyéthers, des blocs polyamides de longueur très variable, mais aussi les différents réactifs ayant réagi de façon aléatoire qui sont répartis de façon statistique le long de la chaîne polymère.

Ces polymères à blocs polyamides et blocs polyéthers qu'ils proviennent de la copolycondensation de séquences polyamides et polyéthers préparées auparavant ou d'une réaction en une étape présentent, par exemple, des duretés shore D pouvant être comprises entre 20 et 75 et avantageusement entre 30 et 70 et une viscosité intrinsèque entre 0,8 et 2,5 mesurée dans le métacrésol à 25°C.

Que les blocs polyéthers dérivent du polyéthylène glycol du polyoxypropylène glycol ou du polyoxytétraméthylène glycol, ils sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. Ils peuvent être aussi mélangés avec des précurseurs de polyamide et un limiteur de chaîne pour faire les polymères à blocs polyamides et blocs polyéthers ayant des motifs répartis de façon statistique.

Des polymères à blocs polyamides et polyéthers sont décrits dans les brevets US 4 331 786, US 4 115 475, US 4 195 015, US 4 839 441, US 4 864 014, US 4 230 838 et US 4 332 920.

Le polyéther peut être par exemple un polyéthylène glycol (PEG), un polypropylène glycol (PPG) ou un polytétra méthylène glycol (PTMG). Ce dernier est aussi appelé polytétrahydrofurane (PTHF).

Que les blocs polyéther soient introduits dans la chaîne du polymère à blocs polyamides et blocs polyéther sous forme de diols ou de diamines, on les appelle par simplification blocs PEG ou blocs PPG ou encore blocs PTMG.

On ne sortirait pas du cadre de l'invention si les blocs polyéther contenaient des motifs différents tels que des motifs dérivés de l'éthylène glycol, du propylène glycol ou encore du tétraméthylène glycol.

Avantageusement, le polymère à blocs polyamides et blocs polyéthers est tel que le polyamide est le constituant majoritaire en poids, c'est-à-dire que la quantité de polyamide qui est sous forme de blocs et celle qui est éventuellement répartie de façon statistique dans la chaîne représente 50% en poids ou plus du polymère à blocs polyamide et blocs polyéther. Avantageusement, la quantité de polyamide et la quantité de polyéther sont dans le rapport (polyamide / polyéther) 50/50 à 80/20.

De préférence, les blocs polyamides et les blocs polyéther d'un même polymère (B) ont respectivement des masses Mn 1000/1000, 1300/650, 2000/1000, 2600/650 et 4 000 /1 000.

A titre d'exemples de polymères fluorés, on peut citer le polyfluorure de vinylidène (PVDF), les copolymères comprenant du fluorure de vinylidène (VF2), les copolymères de l'éthylène et du tétrafluoroéthylène, le poly (trifluoroéthylène), les copolymères du trifluoroéthylène, les homo et copolymères de l'hexafluoropropène, les homo et copolymères du chlorotrifluoroéthylène. On utilise avantageusement le PVDF.

A titre d'exemple de polymères styrèniques on peut citer le polystyrène, le SAN (copolymère styrène / acrylonitrile), l'ABS, les alliages de SAN et d'ABS et les alliages de polycarbonate et d'ABS.

A titre de polyuréthanes thermoplastiques, on peut citer les polyétheruréthannes, par exemple, ceux comprenant des motifs diisocyanates, des motifs dérivés de polyéther diols et des motifs dérivés de l'éthane diol ou du butane diol, 1-4. On peut encore citer les polyesteruréthannes par exemple ceux comprenant des motifs diisocyanates, des motifs dérivés de polyesters diols amorphes et des motifs dérivés de l'éthane diol ou du butane diol, 1-4.

Les copolymères à blocs polyesters et blocs polyéther sont des copolymères ayant des motifs polyéthers dérivés de polyétherdiols tels que le polyéthylène glycol (PEG), le polypropylène glycol (PPG) ou le polytétraméthylène glycol (PTMG), des motifs diacide carboxylique tels que l'acide téréphtalique et des motifs glycol (éthane diol) ou butane diol, 1-4. L'enchaînement des polyéthers et des diacides forme les segments souples alors que l'enchaînement du glycol ou du butane diol avec les diacides forme les segments rigides du copolyétherester. De tels copolyétheresters sont décrits dans les brevets EP 402 883 et EP 405 227 dont le contenu est incorporé dans la présente demande.

A titre d'exemple de polyester dans les alliages de polycarbonate et de polyester, on peut citer le PET (polyéthylène téréphtalate), le PBT (polybutylène téréphtalate) ou le PEN (polyéthylène naphténate).

Les polycétones sont des polymères comprenant substantiellement une mole d'oxyde de carbone pour chaque mole de monomère insaturé. Ce monomère peut être choisi parmi les alpha oléfines ayant de 2 à 12 atomes de carbone ou leurs dérivés de substitution. Il peut aussi être choisi parmi le styrène ou ses dérivés obtenus par substitution avec des alkyls tels que les méthylstyrènes, éthylstyrène et isopropylstyrène. De préférence, les polycétones sont des copolymères de l'éthylène et de l'oxyde de carbone ou des copolymères de l'éthylène, du polypropylène et de l'oxyde de carbone.

Quand les polycétones sont des copolymères de l'éthylène, d'un deuxième monomère et de l'oxyde de carbone, il y a au moins deux motifs éthylène pour un motif du deuxième monomère et de préférence 10 à 100.

Les polycétones peuvent être représentées par la formule :

―(―CO―CH₂―CH₂―)ₓ―(―CO―A―)_{y}―

dans laquelle A désigne un monomère insaturé ayant au moins 3 atomes de carbone, le rapport x/y étant au moins 2.

Les motifs -(-CO-CH₂-CH₂-) et -(-CO-A-)- sont répartis au hasard dans la chaîne de polycétone.

Les masses molaires en nombre peuvent être comprises entre 1000 et 200000 avantageusement entre 20000 et 90000 (mesurées par chromatographie à perméation de gel). Les températures de fusion peuvent être comprises entre 175 et 300° C, le plus souvent entre 200 et 270° C. Des synthèses de ces polycétones sont décrites dans les brevets US 4 843 144, et US 4 880 903 et US 3 694 412 dont le contenu est incorporé dans la présente demande.

On ne sortirait pas du cadre de la présente invention en utilisant pour (M) un mélange de plusieurs thermoplastiques.

S'agissant de (B1) la fonction peut être apportée par greffage d'un monomère fonctionnel ou par polymérisation avec ce monomère.

A titre d'exemples de fonctions on peut citer les acides carboxyliques et leurs dérivés, les chlorures d'acides, les isocyanates, les oxazolines, les époxydes, les amines ou les hydroxydes.

Des exemples d'acides carboxyliques insaturés sont ceux ayant 2 à 20 atomes de carbone tels que les acides acrylique, méthacrylique, maléique, fumarique et itaconique. Les dérivés fonctionnels de ces acides comprennent par exemple les anhydrides, les dérivés esters, les dérivés amides, les dérivés imides et les sels métalliques (tels que les sels de métaux alcalins) des acides carboxyliques insaturés.

Des acides dicarboxyliques insaturés ayant 4 à 10 atomes de carbone et leurs dérivés fonctionnels, particulièrement leurs anhydrides, sont des monomères particulièrement préférés.

Ces monomères comprennent par exemple les acides maléique, fumarique, itaconique, citraconique, allylsuccinique, cyclohex-4-ène-1,2-dicarboxylique, 4-méthyl-cyclohex-4-ène-1,2-dicarboxylique, bicyclo(2,2,1)hept-5-ène-2,3-dicarboxylique, x-méthylbicyclo(2,2,1-hept-5-ène-2,3-dicarboxylique, les anhydrides maléique, itaconique, citraconique, allylsuccinique, cyclohex-4-ène-1,2-dicarboxylique, 4-méthytènecydohex-4-ène-1,2-dicarboxylique, bicyclo(2,2,1)hept-5-ène-2,3-dicarboxylique, et x-méthytbicydo(2,2,1)hept-5-ène-2,2-dicarboxylique.

Des exemples d'autres monomères comprennent des dérivés amides des acides carboxyliques insaturés tels que acrylamide, méthacrylamide, monoamide maléique, diamide maléique, N-monoéthylamide maléique, N,N-diéthylamide maléique, N-monobutytamide maléique, N,N-dibutylamide maléique, monoamide furamique, diamide furamique, N-monoéthylamide fumarique, N,N-diéthylamide fumarique, N-monobutylamide fumarique et N,N-dibutylamide furamique ; des dérivés imides des acides carboxyliques insaturés tels que maléimide, N-butylmaléimide et N-phénylmaléimide ; et des sels métalliques d'acides carboxyliques insaturés tels que acrylate de sodium, méthacrylate de sodium, acrylate de potassium, et méthacrylate de potassium.

Des exemples d'époxydes insaturés sont notamment :
- les esters et éthers de glycidyle aliphatiques tels que l'allylglycidyléther, le vinylglycidyléther, le maléate et l'itaconate de glycidyle, l'acrylate et le méthacrylate de glycidyle, et
- les esters et éthers de glycidyle alicycliques tels que le 2-cyclohexène-1-glycidyléther, le cyclohexène-4,5-diglycidylcarboxylate, le cyclohexène-4-glycidyl carboxylate, le 5-norbornène-2-méthyl-2-glycidyl carboxylate et l'endocis-bicyclo(2,2,1)-5-heptène-2,3-diglycidyl dicarboxylate.

Avantageusement l'alkyle du (meth)acrylate et le 2-ethyle hexyle (AE2H), l'acrylate de n-octyle et l'acrylate d'isononyle. La proportion de (meth)acrylate est avantageusement de 5 à 40 % en poids de (B1), la proportion de la fonction est avantageusement de 0,1 à 10 % en poids de (B1). Le MFI de (B1) est avantageusement compris entre 0,2 et 40 (à 190°C sous 2,16kg). Le MFI (abréviation de Melt Flow Index) désigne l'indice de fluidité à l'état fondu et s'exprime en g/10mn. De préférence la fonction est apportée par copolymérisation avec l'éthylène et le (meth)acrylate. Ces copolymères peuvent être fabriqués par polymérisation radicalaire dans des réacteurs tubulaires ou des autoclaves à des pressions comprises entre 200 et 3000 bars.

S'agissant de la variante dans laquelle (B) comprend (B2) et un modifiant choc, (B2) est un copolymère de l'éthylène et d'un (meth)acrylate d'un alkyl ayant au moins 5 atomes de carbone. (B2) ne diffère de (B1) que par l'absence de fonction. Le MFI de (B2) est avantageusement compris entre 0,2 et 40 (190°C sous 2,16 kg).

La fonction du modifiant choc peut être choisie parmi les mêmes fonctions que celles de (B1).

Le modifiant choc peut être une chaîne de polyoléfine ayant des greffons polyamide ou oligomères de polyamide ; ainsi il a des affinités avec les polyoléfines et les polyamides.

Le modifiant choc peut être aussi un copolymère d'éthylène ayant des motifs anhydride maléique ; ainsi il a des affinités avec les polyéthylènes et peut réagir avec les polyamides.

A titre d'exemple de modifiant choc on peut citer les polyoléfines fonctionnalisées, les polyesters aliphatiques greffés, les polymères à blocs polyéther et blocs polyamide éventuellement greffés, les copolymères de l'éthylène et d'un ester vinylique d'acide carboxylique saturé. Les copolymères à blocs polyéther et blocs polyamide peuvent être choisis parmi ceux qu'on a cités plus haut. Ils peuvent être utilisés au titre des polymères (M) et aussi comme modifiant souple. Dans ce dernier cas on choisi plutôt des copolymères souples c'est à dire ayant un module de flexion entre 10 et 200 MPa.

Le modifiant choc peut être aussi un copolymère à blocs ayant au moins un bloc compatible avec (M) et au moins un bloc compatible avec (B2).

La polyoléfine fonctionnalisée est un polymère comprenant des motifs alpha oléfine et des motifs époxyde ou acide carboxylique ou anhydride d'acide carboxylique.

A titre d'exemple de modifiant choc on peut citer les polyoléfines ou encore les polymères blocs SBS, SIS, SEBS, EPR (appelé aussi EPM) ou EPDM greffés par des époxydes insaturés tels que le (méth.)acrylate de glycidyle, ou par des acides carboxyliques tels que l'acide (méth)acrylique ou encore par des anhydrides d'acides carboxyliques insaturés tels que l'anhydride maléique. EPR désigne les élastomères éthylène-polypropylène et EPDM les élastomères éthylène-polypropylène-diène.

On entend par polyoléfine un polymère comprenant des motifs oléfines tels que par exemple des motifs éthylène, propylène, butène-1, ou tout autre alpha oléfine. A titre d'exemple, on peut citer :
- les polyéthylènes tels que les LDPE, HDPE, LLDPE ou VLDPE, le polypropylène, les copolymères éthylène / propylène, ou encore les PE métallocènes. ;
- les copolymères de l'éthylène avec au moins un produit choisi parmi les sels ou les esters d'acides carboxyliques insaturés, ou les esters vinyliques d'acides carboxyliques saturés.

Avantageusement, la polyoléfine est choisie parmi le LLDPE, le VLDPE, le polypropylène, les copolymères éthylène / acétate de vinyle ou les copolymères éthylène / (méth.)acrylate d'alkyle. La densité peut être avantageusement comprise entre 0,86 et 0,965, le Melt Flow Index (MFI) peut être compris entre 0,3 et 40.

A titre d'exemple de modifiant choc on peut encore citer :
- les copolymères de l'éthylène, d'un époxyde insaturé et éventuellement d'un ester ou un sel d'acide carboxylique insaturé ou d'un ester vinylique d'acide carboxylique saturé. Ce sont par exemple les copolymères éthylène / acétate de vinyle / (méth)acrylate de glycidyle ou les copolymères éthylène / (méth)acrylate d'alkyle / (méth)acrylate de glycidyle.
- les copolymères de l'éthylène d'un anhydride d'acide carboxylique insaturé et/ou d'un acide carboxylique insaturé pouvant être partiellement neutralisé par un métal (Zn) ou un alcalin (Li) et éventuellement d'un ester d'acide carboxylique insaturé ou d'un ester vinylique d'acide carboxylique saturé. Ce sont par exemple les copolymères éthylène / acétate de vinyle / anhydride maléique ou les copolymères éthylène / (méth)acrylate d'alkyle / anhydride maléique ou encore les copolymères éthylène / (méth)acrylate de Zn ou Li / anhydride maléique.
- le polyéthylène, le polypropylène, les copolymères éthylène propylène greffés ou copolymérisés avec un anhydride d'acide carboxylique insaturé puis condensés avec un polyamide (ou un oligomère de polyamide) monoaminé. Ces produits sont décrits dans EP 342 066.

Avantageusement, la polyoléfine fonctionnalisée est choisie parmi les copolymères éthylène / (méth.)acrylate d'alkyle / anhydride maléique, les copolymères éthylène / acétate de vinyle / anhydride maléique, les copolymères éthylène propylène majoritaires en propylène greffés par de l'anhydride maléique puis condensés avec du polyamide 6 monoaminé ou des oligomères mono aminés du caprolactame.

De préférence, c'est un copolymère éthylène / (méth.)acrylate d'alkyle / anhydride maléique comprenant jusqu'à 40% en poids de (méth.)acrylate d'alkyle et jusqu'à 10% en poids d'anhydride maléique. Le (méth.)acrylate d'alkyle peut être choisi parmi l'acrylate de méthyle, l'acrylate d'éthyle, l'acrylate de n-butyle, l'acrylate d'iso butyle, l'acrylate d'éthyl-2-hexyle, l'acrylate de cyclohexyle, le méthacrylate de méthyle et le méthacrylate d'éthyle.

A titre de polyesters aliphatiques greffés on peut citer la polycaprolactone greffée par de l'anhydride maléique, du méthacrylate de glycidyle, des esters vinyliques ou du styrène. Ces produits sont décrits dans la demande EP 711 791 dont le contenu est incorporé dans la présente demande.

Avantageusement le modifiant choc est choisi parmi les copolymères éthylene-polypropylène (EPR et EPDM), greffés par l'anhydride maleique, les copolymères éthylène-(meth)acrylate d'alkyle-anhydride maleique, ces derniers copolymères pouvant être mélangés avec des copolymères de l'éthylène et d'un (meth)acrylate d'alkyle, les copolymères éthylène-(meth)acrylate d'alkyle-anhydride maleique mélangés avec (i) des copolymères éthylène-(meth)acrylate d'alkyle-methacrylate de glycidyle et (ii) des copolymères éthylène-(meth)acrylate d'alkyle-acide acrylique ces trois derniers étant réticulés. Ces copolymères éthylène-(meth)acrylate d'alkyle-anhydride maleique, éthylène-(meth)acrylate d'alkyle-methacrylate de glycidyle et éthylène-(meth)acrylate d'alkyle-acide acrylique peuvent contenir jusqu'à 40 % en poids d'acrylate et 10 % en poids soit d'anhydride soit d'époxyde soit d'acide. Le MFI (melt flow index ou indice de fluidité à l'état fondu) est compris entre 2 et 50 g/10 mn , mesuré à 190°C sous 2, 16 kg.

Avantageusement le modifiant choc a un module de flexion inférieur à 200 MPa et de préférence compris entre 10 et 200.

Les proportions de (B2) et du modifiant choc peuvent varier dans une large fourchette et avantageusement dans le rapport 80/20 à 20/80.

La résistance au choc augmente avec la quantité de (B), avantageusement la proportion de (B) est de 5 à 35 parties pour 95 à 65 parties de (M) et de préférence 15 à 25 parties pour 85 à 75 parties de (M).

On ne sortirait pas du cadre de l'invention en utilisant plusieurs copolymères (B1) ayant des fonctions identiques ou différentes, de même on peut utiliser plusieurs copolymères (B2) ayant des fonctions identiques ou différentes associés avec un ou plusieurs modifiants choc.

On ne sortirait pas du cadre de l'invention en ajoutant dans (B) d'autres polymères telles que des polyoléfines homo ou copolymères non fonctionnalisées ou fonctionnalisées. A titre d'exemple on peut citer les copolymères éthylène / (meth)acrylate d'alkyle quel que soit le type d'alkyle mais on préfère les (meth)acrylate d'alkyle ayant au moins 5 atomes de carbone tels que décrits dans la présente invention.

Selon une deuxième forme de l'invention, (B) comprend aussi un polymère fonctionnalisé (C1) ou un réactif difonctionnel (C2) de manière à former une phase dispersée réticulée dans la matrice (M). L'intérêt de cette phase dispersée réticulée est de faciliter son incorporation dans la matrice (M) pour en mettre des quantités élevées telles que de 40 à 60% sans risquer d'inversion de matrice. L'avantage de cette phase réticulée, quel que soit sa quantité, est de pouvoir augmenter le module de flexion des compositions de l'invention. Pour effectuer cette réticulation on preferre les réactions entre les fonctions anhydride d'acide carboxylique et les fonctions époxydes.

S'agissant de (B) du type (B1), (C1) peut être choisi avantageusement parmi les modifiants choc déjà cités plus haut pourvu qu'il ait des fonctions pouvant réagir avec celles de (B1) ou parmi les copolymères (B1) pourvu qu'il ait des fonctions pouvant réagir avec celles de (B1) déjà présent. Dans ce dernier cas la phase (B) est le produit de réaction de deux copolymères (B1) ayant des fonctions différentes et pouvant réagir l'une sur l'autre. (C2) est avantageusement un diacide carboxylique tel que l'acide adipique ou l'acide dodecanedioïque ou un diepoxyde tel que le DGEBA (diglycidyl éther du bisphenol A).

S'agissant de (B) du type (B2) en mélange avec le modifiant choc, (C1) peut être choisi parmi un autre modifiant choc pourvu qu'il ait des fonctions pouvant réagir avec celles du modifiant choc déjà présent ou parmi les copolymères (B1) pourvu qu'il ait des fonctions pouvant réagir avec celles du modifiant choc. (C2) est comme cité plus haut.

Ces réactions de réticulation se font habituellement selon la stoechiométrie des fonctions en présence, l'homme de métier peut donc déterminer facilement les proportions de (B1), (B2), (C1) ou (C2). On utilise avantageusement la réaction entre la fonction anhydride et entre la fonction époxyde pour former la phase réticulée.

S'agissant de la réaction entre les fonctions anhydride et époxyde on peut ajouter un catalyseur. Parmi les composés capables d'accélérer la réaction entre la fonction époxy et la fonction anhydride on peut citer notamment :
- des amines tertiaires telles que la diméthyllaurylamine, la diméthylstéarylamine, la N-butylmorpholine, la N,N-diméthylcyclohexylamine, la benzyldiméthylamine, la pyridine, la diméthylamino-4-pyridine, le méthyl-l-imidazole, la tétraméthyléthylhydrazine, la N,N-diméthylpipérazine, la N,N,N',N'-tétraméthyl-l,6-hexanediamine, un mélange d'amines tertiaires ayant de 16 à 18 carbones et connues sous l'appellation de diméthylsuifamine
- des phosphines tertiaires telles que la triphénylphosphine
- des alkyldithiocarbamates de zinc.

Dans cette deuxième forme de l'invention la réaction entre les fonctions anhydride et époxyde est avantageusement catalysée par des fonctions acides. La demanderesse a trouvé qu'il suffit de remplacer une partie de l'un (ou des) polymères portant des fonctions anhydride par un polymère portant des fonctions acide carboxylique. A titre d'exemple on remplace 10 à 70% en poids d'un copolymère éthylène-(meth)acrylate d'alkyle-anhydride maléique à 3% d'anhydride par le même poids d'un copolymère éthylène-(meth)acrylate d'alkyle-acide (meth)acrylique à 6% d'acide. De préférence cette proportion est de 20 à 35%.

Selon une troisième forme la présente invention concerne des compositions thermoplastiques comprenant :
- 40 à 97 parties de (M),
- 60 à 3 parties d'une phase dispersée comprenant :
- 0 à 30 parties d'un polymère thermoplastique (D) différent de (M) et peu compatible avec (M),
- 3 à 30 parties de (B),

(D) étant encapsulé en tout ou en partie dans (B).

Le thermoplastique (D) peut être choisi parmi la famille décrite pour (M) mais en plus aussi parmi les polyesters tels que le PET, PBT ou le PEN. (D) est différent c'est à dire qu'il n'est pas identique en nature et MFI à (M). Par exemple (M) étant un PA 6 ,(D) peut être un PA 12. En effet si (D) et (M) sont par exemple tous les deux du PA 12 de même MFI l'invention n'a aucun intérêt. L'avantage de cette troisième forme de l'invention est de pouvoir mettre des nodules de type core-shell (coeur-ecorce) dans la matrice (M).

(M) et (D) sont choisis peu compatibles. (D) étant dispersé dans la matrice de (M) sous forme de nodules, (M) et (D) sont jugés d'autant plus incompatibles que les nodules de (D) sont plus gros. Cependant on estime que si les nodules de (D) sont supérieurs à 10 µm c'est peu compatible, si les nodules sont entre 0,5 et 10 µm et de préférence entre 0,5 et 2 µm c'est compatible et en dessous de 0,5 µm très compatible.

A titre d'exemple de couples (M) / (D) on peut citer :
- PA6/PA12
- PA121PA11
- PA 11 /PA 12
- PA 6 / PET
- PA 12 / PA 12 de MFI différent
- PA 6 / PA 6 de MFI différent

Les compositions selon l'invention peuvent renfermer en outre au moins un additif choisi parmi :
- les colorants ;
- les pigments ;
- les azurants ;
- les anti-oxydants ;
- les stabilisateurs UV.

Les compositions de l'invention sont fabriquées par mélange à l'état fondu des différents constituants (extrudeuses bivis , co- malaxeur BUSS®, monovis) selon les techniques habituelles des thermoplastiques. Les compositions peuvent être granulées en vue d'une utilisation ultérieure (il suffit de les refondre) ou bien de suite injectées dans un moule ou un dispositif d'extrusion ou de coextrusion pour fabriquer des tubes, des profilés ou différents objets.

### [Exemples]

On a utilisé les produits suivants :
**PA 6 Ultramid® B3** : Polyamide 6 de MFI = 20 (235°C 2.16 kg) fourni par BASF.
**Terpo 1** : Terpolymère Éthylène / Acrylate d'Éthyle Anhydride Maléique de composition respectivement 69.15% / 29.5% / 1.35% en poids, MFI = 6 (190°C 2,16kg).
**Terpo 3** : Terpolymère Éthylène / Acrylate de 2-Ethyle Hexyle / Anhydride Maléique de composition respectivement 69% / 30% / 1% en poids, MFI 5,5 (190°C 2,16kg).
**Terpo 4** : Terpolymère Éthylène / Acrylate de 2-Ethyle Hexyle / Anhydride Maléique de composition respectivement 67% / 32% / 1% en poids, MFI = 6 (190°C 2,16kg).
**Terpo 5 :** Terpolymère Éthylène / Acrylate d'Éthyle / Anhydride Maléique de composition respectivement 80% / 17% / 3% en poids, , MFI = 70 (190°C 2,16kg).
**Copo 1** : Copolymère Éthylène / Acrylate de 2-Ethyle Hexyle de composition respectivement 70% / 30% en poids, MFI = 2 (190°C 2,16kg).
**Copo 2** : Copolymère Éthylène / Acrylate de Butyle de composition respectivement 70% / 30% en poids, MFI = 2 (190°C 2,16kg).

### - Exemples

Dans les exemples 1 à 3 et 6-7 on utilise comme extrudeuse de compoundage un co-malaxeur BUSS® 46 mm (BUSS Ko-Kneader en Anglais) suivi d'une extrudeuse de reprise. Les granulés de Polyamide et de Terpolymère sont introduits par doseurs au puits 1 du malaxeur.

Dans les exemples 4 à 5 on utilise comme extrudeuse de compoundage une bivis co-rotative de 40 mm (Werner 40). Les granulés de Polyamide et de Terpolymère Terpolymère sont introduits par doseurs au puits 1 de l'extrudeuse.

Le Polyamide 6 de base est l'Ultramid B3 de BASF. On compare ici deux copolymères à l'AE2H (Terpo 3 et Terpo 4) à un copolymère à l'acrylate d'éthyle (terpo 1). Après compoundage et granulation, les granulés sont séchés sous vide à 80°C pendant une nuit afin d'amener le taux d'humidité mesuré sur granulés à moins de 0,1%. On procède alors à l'injection des éprouvettes en forme de barreaux 80x10x4 mm pour la réalisation des tests de Choc Charpy entaillés (selon la Norme ISO 179/1eA:1994) et mesure du module de flexion (selon la Norme ISO 178:93). Ces tests sont effectués après une période de mise en conditionnement de 15 jours à 23°C et 50% d'humidité relative.

On note que les trois terpolymères permettent d'obtenir des propriétés choc nettement supérieures à celle du Polyamide 6 seul. Néanmoins, les deux terpolymères à l'AE2H (Terpo 3 et 4) sont bien plus performants que le terpolymères à l'AE (acrylate d'éthyle, Terpo 1).

**Tableau 1**

| Exemple n° | 1 | 2 | 3 | 4 | 5 | 6 | 7 |
|---|---|---|---|---|---|---|---|
| PA6 Ultramid B3 | 100 | 80 | 80 | 80 | 80 | 80 | 80 |
| terpo 1 | | 20 | | 20 | | | |
| terpo 3 | | | 20 | | | | |
| terpo 4 | | | | | 20 | | |
| copo 2 | | | | | | 18 | 18 |
| copo 1 | | | | | | | |
| Terpo 5(EA 17% MAH 3%) | | | | | | 2 | 2 |
| Extrudeuse | Buss | Buss | Buss | bivis | bivis | Buss | Buss |
| Choc Charpy entaillé ISO 179:94, à + 23°C | 11 | 40 | 112 | 34 | 43 | 50 | 60 |
| Choc Charpy entaillé ISO 179:94, à - 40°C | 2.5 | 11 | 16.5 | 11 | 17 | 12 | 14.5 |
| Mesure faites sur éprouvettes conditionnées 15 j à 50% RH | | | | | | | |
| Conditions de compoundage Buss 46 mm T° = 230-270°C , vitesse = 285 rpm , débit = 20 kg/h | | | | | | | |
| Conditions de compoundage bivis 40mm (Werner 40) T° = 250-280°C, vitesse = 300 rpm, débit = 80 kg/h | | | | | | | |

## Revendications

1. Compositions thermoplastiques comprenant :
- 40 à 97 parties d'un polymère thermoplastique (M) formant matrice choisi isi parmi les polyamides, les copolymères à blocs polyamides, les polymères fluorés, le polycarbonate, les résines styréniques, le PMMA, les polyuréthanes thermoplastiques (TPU), les copolymères à blocs polyester et blocs polyéther, les alliages de polycarbonate et de polyesters, les polycétones, le PVC et les copolymères de l'éthylène et de l'alcool vinylique (EVOH).
- 60 à 3 parties de (B) comprenant :
soit un copolymère (B1) de l'éthylène et d'un acrylate d'un alkyle choisi parmi le 2-éthyle hexyle, le n-octyle et l'isononyle, et qui porte une fonction,
soit un mélange d'un copolymère (B2) de l'éthylène et d'un acrylate d'un alkyle choisi parmi le 2-éthyle hexyle, le n-octyle et l'isononyle, et ne portant pas de fonction avec un modifiant choc qui porte une fonction.

2. Compositions selon la revendication 1 dans lesquelles la fonction de (B1) et du modifiant choc est choisie parmi les acides carboxyliques et leurs dérivés, les chlorures d'acides, les isocyanates, les oxazolines, les époxydes, les amines ou les hydroxydes.

3. Compositions selon l'une quelconque des revendications précédentes dans lesquelles l'alkyle du (méth)acrylate d'alkyle de (B1) et (B2) est l'acrylate de 2-éthyle hexyle.

4. Compositions selon l'une quelconque des revendications précédentes dans lesquelles le modifiant choc est un copolymère éthylène / (méth)acrylate d'alkyle / anhydride maléique.

5. Compositions selon l'une quelconque des revendications précédentes dans lesquelles avantageusement la proportion de (B) est de 5 à 35 parties pour 95 à 65 parties de (M).

6. Compositions selon l'une quelconque des revendications précédentes dans lesquelles (B) comprend aussi des copolymères éthylène / (méth)acrylate d'alkyle.

7. Compositions selon l'une quelconque des revendications précédentes dans lesquelles (B) comprend aussi un polymère fonctionnalisé (C1) ou un réactif difonctionnel (C2) de manière à former une phase dispersée réticulée dans la matrice (M).

8. Compositions selon la revendication 7 dans lesquelles la réticulation de la phase dispersée résulte de la réaction entre une fonction anhydride et entre une fonction époxyde.

9. Compositions selon la revendication 8 dans lesquelles une partie de l'un des polymères portant des fonctions anhydrides est remplacé en partie par un polymère portant des fonctions acides.

10. Compositions selon l'une quelconque des revendications 1 à 6 comprenant :
- 40 à 97 parties de (M),
- 60 à 3 parties d'une phase dispersée comprenant :
- 0 à 30 parties d'un polymère thermoplastique (D) différent de (M) et peu compatible avec (M),
- 3 à 30 parties de (B),
(D) étant encapsulé en tout ou en partie dans (B).

11. Compositions selon la revendication 10 dans lesquelles (D) est choisi parmi les polyamides, les copolymères à blocs polyamides, les polymères fluorés, le polycarbonate, les résines styréniques, le PMMA, les polyuréthanes thermoplastiques (TPU), les copolymères à blocs polyester et blocs polyéther, les alliages de polycarbonate et de polyesters, les polycétones, le PVC, les copolymères de l'éthylène et de l'alcool vinylique (EVOH) et les polyesters tels que le PET, le PBT et le PEN.

## Claims

1. Thermoplastic compositions comprising:
- 40 to 97 parts of a thermoplastic polymer (M) forming a matrix, chosen from polyamides, polyamide block copolymers, fluoro polymers, polycarbonate, styrene resins, PMMA, thermoplastic polyurethanes (TPU), copolymers containing polyester blocks and polyether blocks, polycarbonate-polyester alloys, polyketones, PVC and ethylene-vinyl alcohol copolymers (EVOH),
- 60 to 3 parts of (B) comprising :
either an ethylene-alkyl acrylate copolymer (B1), the alkyl being chosen from 2-ethylhexyl, n-octyl and isononyl, which copolymer (B1) carries a functional group
or a blend of an ethylene-alkyl acrylate copolymer (B2), the alkyl being chosen from 2-ethylhexyl, n-octyl and isononyl, which copolymer (B2) does not carry a functional group, and of an impact modifier which carries a functional group.

2. Compositions according to Claim 1, in which the functional group of (B1) and of the impact modifier is chosen from carboxylic acids and their derivatives, acid chlorides, isocyanates, oxazolines, epoxides, amines and hydroxides.

3. Compositions according to either of the preceding claims, in which the alkyl of the alkyl (meth)acrylate of (B1) and (B2) is 2-ethylhexyl acrylate.

4. Compositions according to any one of the preceding claims, in which the impact modifier is an ethylene/alkyl (meth)acrylate/maleic anhydride copolymer.

5. Compositions according to any one of the preceding claims, in which advantageously the proportion of (B) is from 5 to 35 parts per 95 to 65 parts of (M).

6. Compositions according to any one of the preceding claims, in which (B) also comprises ethylene/alkyl (meth)acrylate copolymers.

7. Compositions according to any one of the preceding claims, in which (B) also comprises a functionalized polymer (C1) or a difunctional reactive agent (C2) so as to form a crosslinked dispersed phase in the matrix (M).

8. Compositions according to Claim 7, in which the crosslinking of the dispersed phase results from the reaction between an anhydride functional group and an epoxy functional group.

9. Compositions according to Claim 8, in which part of one of the polymers carrying anhydride functional groups is partly replaced with a polymer carrying acid functional groups.

10. Compositions according to any one of Claims 1 to 6, which comprise:
- 40 to 97 parts of (M),
- 60 to 3 parts of a dispersed phase comprising:
- 0 to 30 parts of a thermoplastic polymer (D) that differs from (M) and is not very compatible with (M) and
- 3 to 30 parts of (B),
(D) being completely or partly encapsulated in (B).

11. Compositions according to Claim 10, in which (D) is chosen from polyamides, polyamide block copolymers, fluoro polymers, polycarbonate, styrene resins, PMMA, thermoplastic polyurethanes (TPU), copolymers containing polyester blocks and polyether blocks, polycarbonate/polyester alloys, polyketones, PVC and ethylene-vinyl alcohol copolymers (EVOH) and polyesters such as PET, PBT and PEN.

## Patentansprüche

1. Thermoplastische Zusammensetzungen, enthaltend:
- 40 bis 97 Teile eines matrixbildenden thermoplastischen Polymers (M), das unter Polyamiden, Polyamid-Blockcopolymeren, Fluorpolymeren, Polycarbonat, Styrolharzen, PMMA, thermoplastischen Polyurethanen (TPU), Polyester-Polyether-Blockcopolymeren, Polycarbonat-Polyester-Legierungen, Polyketonen, PVC und Ethylen-Vinylalkohol-Copolymeren (EVOH) ausgewählt ist,
- 60 bis 3 Teile (B), enthaltend:
entweder ein eine Funktion tragendes Copolymer (B1) von Ethylen und einem unter 2-Ethylhexyl-, n-Octyl- und Isononylacrylat ausgewählten Alkylacrylat
oder eine Mischung aus einem keine Funktion tragenden Copolymer (B2) von Ethylen und einem unter 2-Ethylhexyl-, n-Octyl- und Isononylacrylat ausgewählten Alkylacrylat und einem eine Funktion tragenden Schlagzähigkeitsmodifikator.

2. Zusammensetzungen nach Anspruch 1, in denen die Funktion von (B1) und dem Schlagzähigkeitsmodifikator unter Carbonsäuren und deren Derivaten, Säurechloriden, Isocyanaten, Oxazolinen, Epoxiden, Aminen und Hydroxiden ausgewählt ist.

3. Zusammensetzungen nach einem der vorhergehenden Ansprüche, in denen es sich bei dem Alkyl(meth)-acrylat von (B1) und (B2) um 2-Ethylhexylacrylat handelt.

4. Zusammensetzungen nach einem der vorhergehenden Ansprüche, in denen es sich bei dem Schlagzähigkeitsmodifikator um ein Ethylen/Alkyl(meth)-acrylat/Maleinsäureanhydrid-Copolymer handelt.

5. Zusammensetzungen nach einem der vorhergehenden Ansprüche, in denen der Anteil an (B) vorteilhafterweise 5 bis 35 Teile auf 95 bis 65 Teile (M) beträgt.

6. Zusammensetzungen nach einem der vorhergehenden Ansprüche, in denen (B) außerdem Ethylen/Alkyl-(meth)acrylat-Copolymere enthält.

7. Zusammensetzungen nach einem der vorhergehenden Ansprüche, in denen (B) außerdem ein funktionelles Polymer (C1) oder ein difunktionelles Reagens (C2) zur Bildung einer vernetzten dispergierten Phase in der Matrix (M) enthält.

8. Zusammensetzungen nach Anspruch 7, in denen die Vernetzung der dispergierten Phase sich aus der Reaktion zwischen einer Anhydridfunktion und einer Epoxidfunktion ergibt.

9. Zusammensetzungen nach Anspruch 8, in denen ein Teil eines der Anhydridfunktionen tragenden Polymere teilweise durch ein Säurefunktionen tragendes Polymer ersetzt ist.

10. Zusammennsetzungen nach einem der Ansprüche 1 bis 6, enthaltend:
- 40 bis 97 Teile (M),
- 60 bis 3 Teile einer dispergierten Phase, enthaltend:
- 0 bis 30 Teile eines thermoplastischen Polymers (D), das von (M) verschieden und mit (M) wenig verträglich ist,
- 3 bis 30 Teile (B),
wobei (D) ganz oder teilweise in (B) verkapselt ist.

11. Zusammensetzungen nach Anspruch 10, in denen (D) unter Polyamiden, Polyamid-Blockcopolymeren, Fluorpolymeren, Polycarbonat, Styrolharzen, PMMA, thermoplastischen Polyurethanen (TPU), Polyester-Polyether-Blockcopolymeren, Polycarbonat-Polyester-Legierungen, Polyketonen, PVC, Ethylen-Vinylalkohol-Copolymeren (EVOH) und Polyestern wie PET, PBT und PEN ausgewählt ist.
